# EUROPEAN PATENT APPLICATION

(11) **EP 4 438 452 A1**
(43) Date of publication of application: **02.10.2024**
(21) Application number: 23166235.4
(22) Date of filing: 31.03.2023
(51) Int. Cl.: B62K 21/04, B62K 25/08

(54) **SINGLE SHOCK SUSPENSION FORK FOR BICYCLE**

(71) Applicant: Alex Global Technology, Inc., Tainan City (TW)
(72) Inventor: Chen, Wei-Chin, Tainan City (TW)
(74) Representative: Lang, Christian

(57) **Abstract**

A single shock suspension fork for bicycles is provided. The single shock suspension fork includes a fork crown (1), a shock absorber (2), a fork brace (3) and two lower fork tubes (4). The two lower fork tubes (4) are fixed and connected with two ends of the fork brace (3) and a top end of each of the lower fork tubes (4) projecting from the fork brace (3) is inserted into a hole (12) on each of two ends of the fork crown (1). A middle part of the fork brace (3) is connected with a first end (21) of the shock absorber (2) while a second end (22) of the shock absorber (2) is inserted and connected with a steerer tube (11) at a central part of the fork crown (1). Thereby the single shock suspension fork has simple structure, labor-and-time saving assembly, and convenient maintenance. Thereby shortcomings of conventional dual shock absorbers (2) such as high manufacturing cost and time-consuming assembly can be overcome.

## Description

### BACKGROUND OF THE INVENTION

### Field of the Invention

The present invention relates to a suspension fork, especially to a single shock suspension fork for bicycles.

### Description of Related Art

In modern society, people ride bikes as a good exercise to improve their fitness during leisure time. For improving safety and comfort during bike riding, shock absorbers are mounted to a front fork of bicycles by bicycle manufacturers. While riding on bumpy roads, impact forces generated are reduced and absorbed by the shock absorbers. A common shock absorber suspension fork for bicycles include a steerer tube having a rear end plugged in and connected with a center of a fork crown, a moveable inner tube connected to each of two ends of the fork crown, and two outer tubes fit around and sealing rear ends of the two inner tubes correspondingly. A shock absorber is mounted in the outer tube and rear ends of the outer tubes are connected with two ends of an axle of a front wheel. A fork brace is connected between top ends of the two outer tubes. Thereby the shock absorber absorbs vibrations for damping.

However, the moveable inner tubes of the front fork are disposed on two sides of the front wheel and the two outer tubes are mounted with two sets of shock absorbers correspondingly so that a weight of the front fork is increased. Thereby production cost and assembly time of the shock absorbers are both increased.

Thus, there is room for improvement and there is a need to provide a novel single shock suspension fork for bicycles which is more convenient to use.

### SUMMARY OF THE INVENTION

Therefore, it is a primary object of the present invention to provide a single shock suspension fork for bicycles having simple structure without affecting original functions for simplifying dual shock absorbers into a single one and further reducing cost of the shock absorbers. Moreover, not only assembly time and labor required are reduced, but maintenance is also more convenient.

In order to achieve the above objects, a single shock suspension fork for bicycles according to the present invention includes a fork crown, a shock absorber, a fork brace, and two lower fork tubes.

The fork crown includes a hollow steerer tube having an inner space and a hole formed on each of two ends of the fork crown. The hollow steerer tube is integrally connected with and extending upward from a central part of the fork crown.

The shock absorber consists of a first end connected to a middle part of the fork brace and a second end inserted and fixed in the inner space of the steerer tube.

The fork brace is composed of an insertion hole formed on each of two ends of the fork brace and a middle part of the fork brace is connected with the first end of the shock absorber.

The two lower fork tubes are inserted through the two insertion holes of the fork brace to be fixed by the insertion holes correspondingly. A top end of each of the lower fork tubes is inserted into the hole on each of the two ends of the fork crown correspondingly to be movably mounted in the hole while a bottom end of each of the lower fork tubes is connected with each of two ends of an axle of a front wheel.

In order to achieve the above objects, a single shock suspension fork for bicycles according to the present invention includes a fork crown, a shock absorber, a fork brace, and two lower fork tubes.

The fork crown includes a hollow steerer tube with an inner space and two inner tubes. The hollow steerer tube with the inner space is integrally connected with and extending upward from a central part of the fork crown and the two inner tubes are arranged at two ends of the fork crown and extending downward.

The shock absorber consists of a first end connected to a middle part of the fork brace and a second end inserted and fixed in the inner space of the steerer tube.

The middle part of the fork brace is connected with the first end of the shock absorber.

Each of the two lower fork tubes is a hollow tube with an opening facing upward. The two lower fork tubes are extending downward from two ends of the fork brace correspondingly and a distal end of each of the two lower fork tubes is connected with each of two ends of an axle of a front wheel correspondingly. The two inner tubes are inserted into the two lower fork tubes through the openings correspondingly and movably mounted in the two lower fork tubes.

Preferably, the shock absorber is a hydraulic damper or an air damper.

Preferably, the shock absorber is a spring assembly.

Preferably, the shock absorber is a hydraulic rod with a spring fit around the hydraulic rod.

The single shock suspension fork for bicycles according to the present invention has the following advantages.

The single shock suspension fork for bicycles is formed by the top ends of the two lower fork tubes mounted in the holes on the two ends of the fork crown, the two lower fork tubes inserted through the two insertion holes on the two ends of the fork brace, and the two ends of the shock absorber respectively connected to the middle part of the fork brace and inserted in the steerer tube on the central part of the fork crown. Or the two inner tubes are arranged at the two ends of the fork crown, extending downward, and moveably mounted into two lower fork tubes correspondingly. Then two ends of the shock absorber are respectively connected to the middle part of the fork brace and the inner space of the steerer tube correspondingly to form the single shock suspension fork for bicycles. Thereby the single shock suspension fork for bicycles features on simple structure, time-and-labor-saving assembly, and convenient maintenance.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is an exploded view of an embodiment of a single shock suspension fork for bicycles according to the present invention;
Fig. 2 is a longitudinal view of an embodiment of a single shock suspension fork for bicycles according to the present invention;
Fig. 3 is a front perspective view of an embodiment of a single shock suspension fork for bicycles according to the present invention;
Fig. 4 is a schematic drawing showing an embodiment mounted to a bicycle according to the present invention;
Fig, 5 is a schematic drawing showing a shock absorber being compressed for dampening of an embodiment according to the present invention;
Fig. 6 is a front perspective view of another embodiment of a single shock suspension fork for bicycles according to the present invention;
Fig. 7 is a longitudinal view of a further embodiment of a single shock suspension fork for bicycles according to the present invention;
Fig. 8 is a front perspective view of a further embodiment of a single shock suspension fork for bicycles according to the present invention;
Fig. 9 is a schematic drawing showing a shock absorber being compressed for dampening of a further embodiment according to the present invention.

### DETAILED DESCRIPTION OF THE PREFERRED EMBODIMENT

In order to learn technical content, purposes and functions of the present invention more clearly and completely, please refer to the following detailed descriptions with the figures and reference signs.

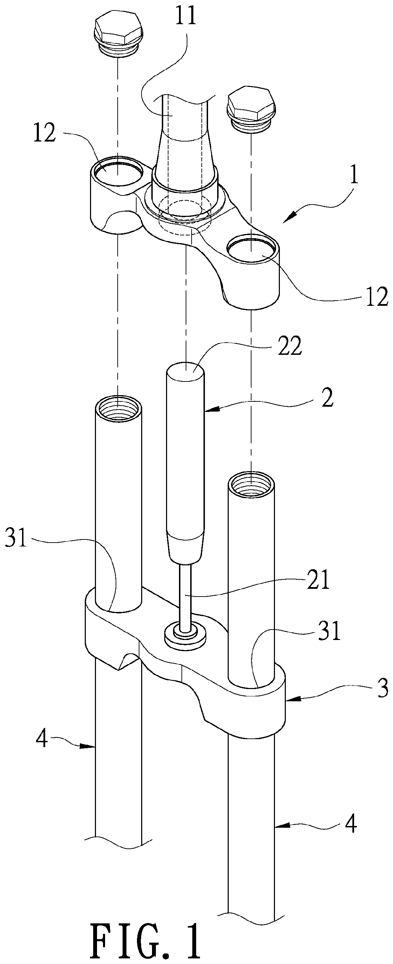

Refer to Fig. 1, a single shock suspension fork for bicycles according to the present invention includes a fork crown 1, a shock absorber 2, a fork brace 3, and two lower fork tubes 4.

A hollow steerer tube 11 with an inner space is integrally connected with and extending upward from a central part of the fork crown 1 while a hole 12 is formed on each of two ends of the fork crown 1.

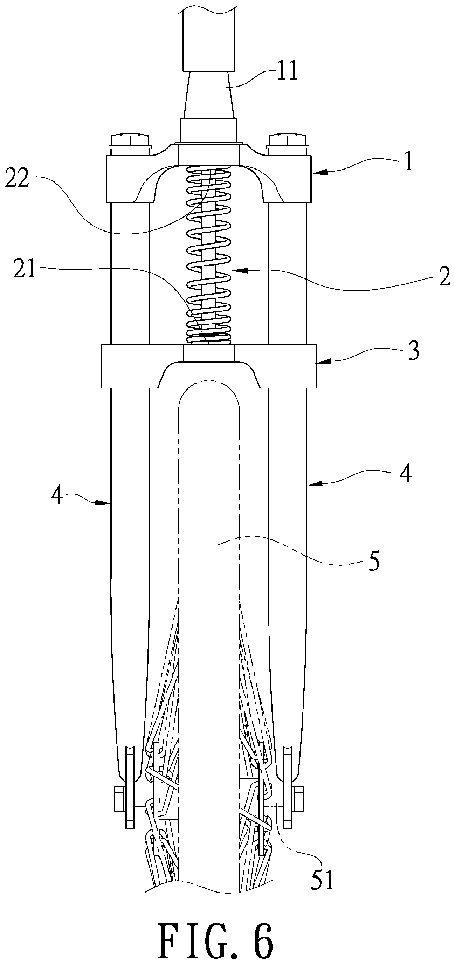

The shock absorber 2 consists of a first end 21 connected to a middle part of the fork brace 3 and a second end 22 inserted into the inner space of the steerer tube 11. In a preferred embodiment, the shock absorber 2 can be a hydraulic damper, an air damper, or a spring assembly as shown in Fig. 6. The shock absorber 2 can also be a hydraulic rod and a spring fit around the hydraulic rod.

The fork brace 3 is connected with the first end 21 of the shock absorber 2 at the middle part thereof and an insertion hole 31 is formed on each of two ends of the fork brace 3.

The two lower fork tubes 4 are inserted through the two insertion holes 31 on the two ends of the fork brace 3 to be connected and positioned by the insertion holes 31 correspondingly. A top end of each of the lower fork tubes 4 is inserted into the hole 12 on each of the two ends of the fork crown 1 correspondingly to be movably mounted in the hole 12 while a bottom end of each of the lower fork tubes 4 is connected with each of two ends of an axle 51 of a front wheel 5.

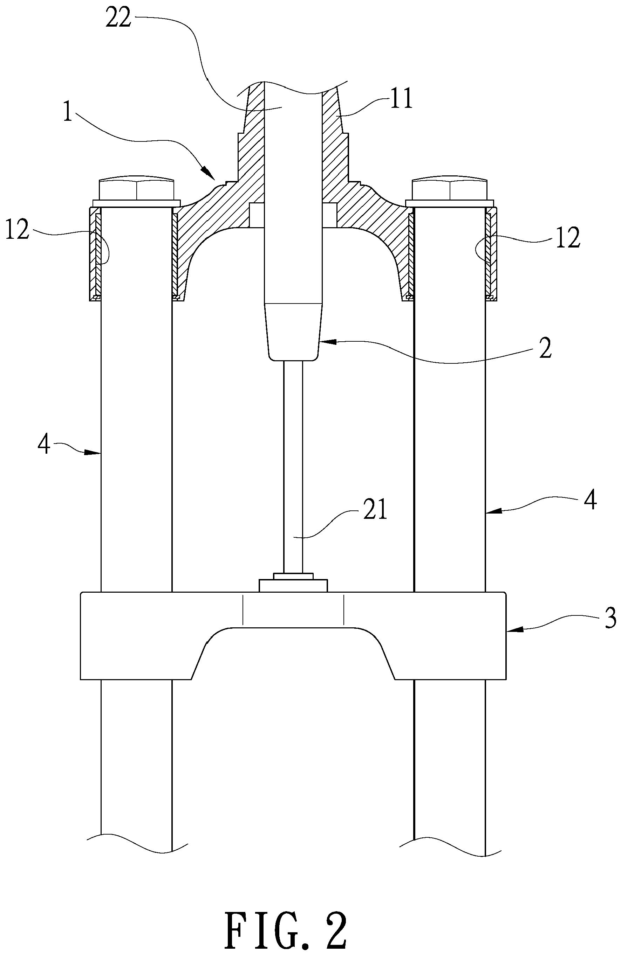

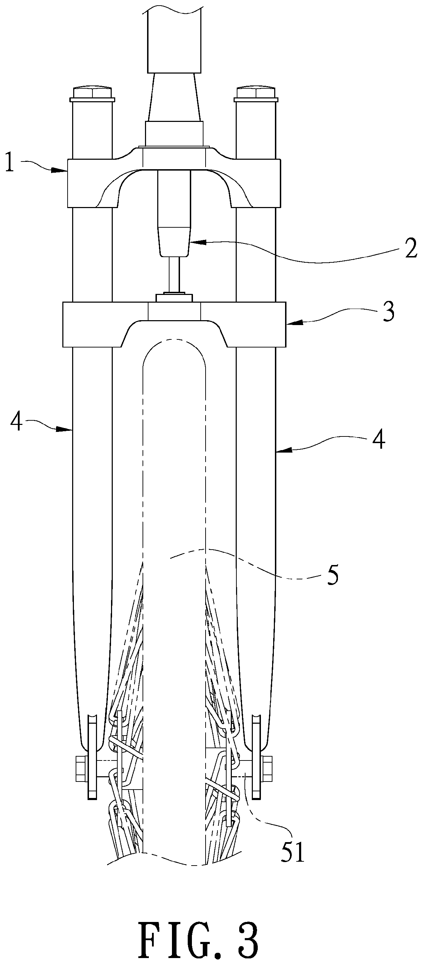

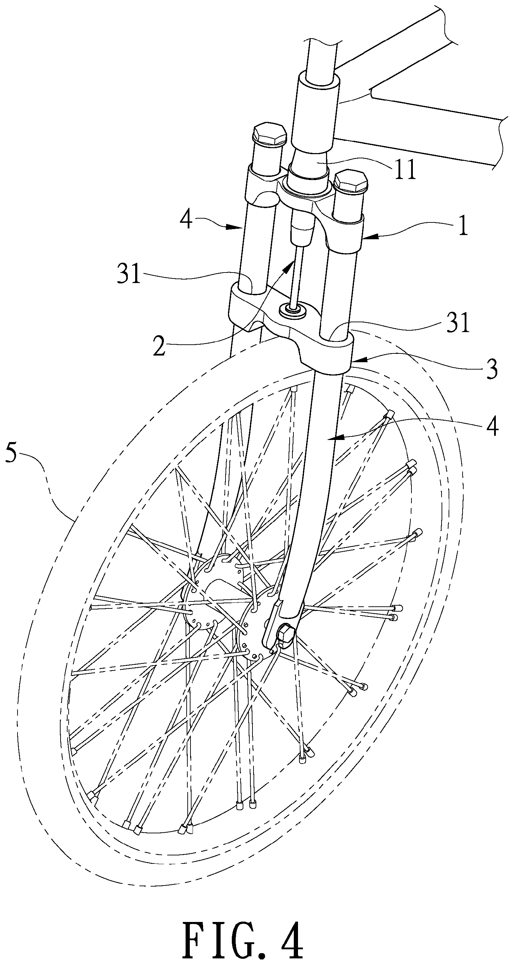

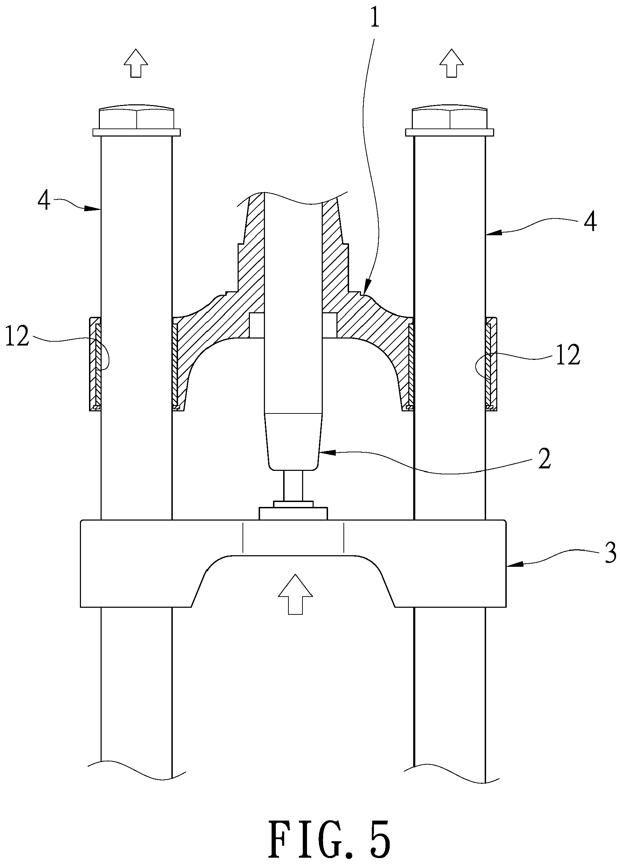

Refer to Fig. 2, Fig. 3, Fig. 4, and Fig. 5, when a single shock suspension fork for bicycles of the present invention is mounted to a bicycle and a rider is riding on a bumpy road, forces are applied to the front end 21 and the second end 22 of the shock absorber 2 by the front wheel 5, a handle, and a frame of the bicycle at the same time. Thus, the shock absorber 2 is compressed to absorb and dampen vibrations and further dissipate vibrations. Moreover, when the front wheel 5 is turning across a raised road surface, the front wheel 5 is moved upward to drive the two lower fork tubes 4 moving upward. Thus, the fork brace 3 is also moved upward and the shock absorber 2 is further compressed to take and convert kinetic energy coming from upward movement of the front wheel 5 to other form of energy for dampening of vibrations (as shown in Fig. 5).

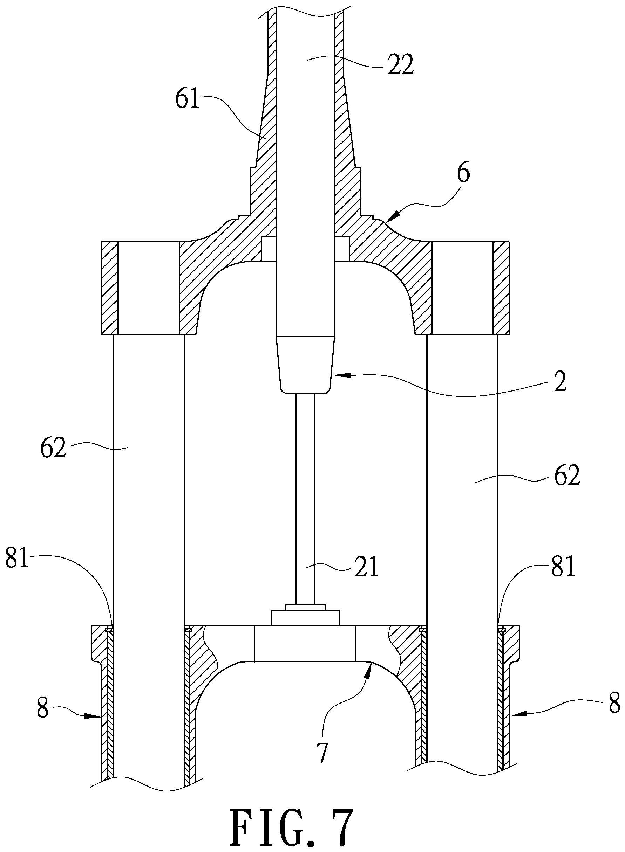

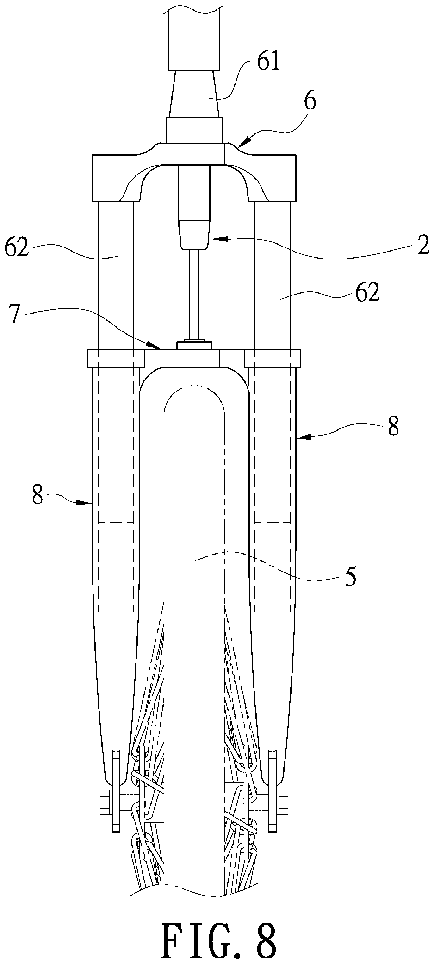

As shown in Fig. 7-9, a further embodiment is disclosed and components with the same reference symbols with the above embodiment are the same components. In this embodiment, the single shock suspension fork for bicycles also includes a fork crown 6, a shock absorber 2, a fork brace 7, and two lower fork tubes 8.

The fork crown 6 includes a hollow steerer tube 61 with an inner space integrally connected with and extending upward from a central part of the fork crown 6 and an inner tube 62 arranged at each of two ends of the fork crown 6 and extending downward.

The shock absorber 2 is composed of a first end 21 connected to a middle part of the fork brace 7 and a second end 22 inserted through and fixed in the inner space of the steerer tube 61.

The fork brace 7 is connected with the first end 21 of the shock absorber 2 at the middle part thereof.

Each of the two lower fork tubes 8 is a hollow tube with an opening 81 facing upward. The two lower fork tubes 8 are extending downward from two ends of the fork brace 7 correspondingly and a distal end of each of the two lower fork tubes 8 is connected with each of two ends of an axle 51 of a front wheel 5. The two inner tubes 62 are inserted into the two lower fork tubes 8 through the openings 81 correspondingly and movably mounted in the two lower fork tubes 8.

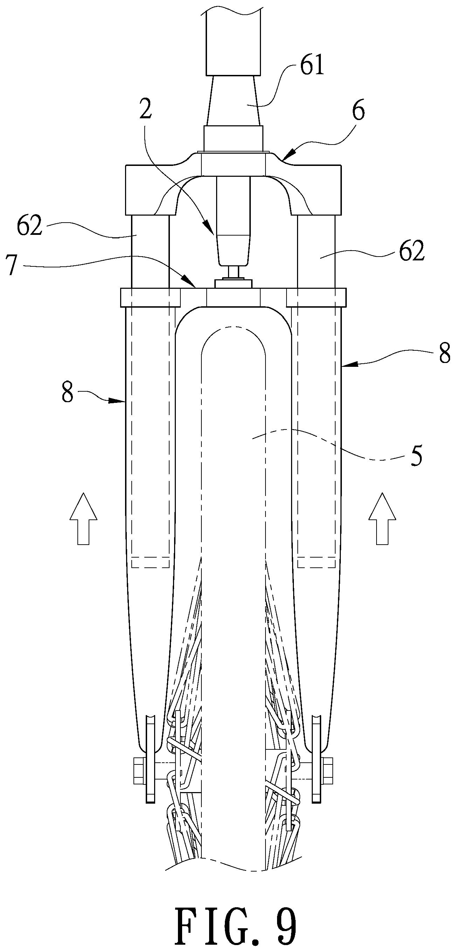

When the front wheel 5 is turning across a raised road surface, the front wheel 5 is moved upward to drive the two lower fork tubes 8 moving upward. Thus, the fork brace 7 is also driven to move upward to compress the shock absorber 2. Thereby the shock absorber 2 takes and converts kinetic energy coming from upward movement of the front wheel 5 to other form of energy for dampening of vibrations (as shown in Fig. 9).

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalent.

## Claims

1. A single shock suspension fork for bicycles comprising a fork crown (1), a shock absorber (2), a fork brace (3), and two lower fork tubes (4),
wherein the fork crown (1) includes a steerer tube (11) integrally connected with and extending upward from a central part of the fork crown (1), and a hole (12) formed on each of two ends of the fork crown (1),
wherein the shock absorber (2) has a first end (21) connected to a middle part of the fork brace (3) and a second end (22) inserted in the steerer tube (11),
wherein the fork brace (3) is composed of an insertion hole (31) formed on each of two ends of the fork brace (3) and the middle part of the fork brace (3) is connected with the first end (21) of the shock absorber (2),
wherein the two lower fork tubes (4) are inserted through the two insertion holes (31) of the fork brace (3) correspondingly and a top end of each of the lower fork tubes (4) is mounted and connected with the hole (12) on each of the two ends of the fork crown (1) correspondingly while bottom ends of the lower fork tubes (4) are connected with two ends of an axle (51) of a front wheel (5) correspondingly.

2. A single shock suspension fork for bicycles comprising a fork crown (6), a shock absorber (2), a fork brace (7), and two lower fork tubes (8),
wherein the fork crown (6) includes a hollow steerer tube (61) having an inner space and integrally connected with and extending upward from a central part of the fork crown (6), and an inner tube (62) arranged at each of two ends of the fork crown (6) correspondingly and extending downward,
wherein the shock absorber (2) consists of a first end (21) connected to a middle part of the fork brace (7) and a second end (22) inserted and fixed in the inner space of the steerer tube (61),
wherein the fork brace (7) has the middle part thereof connected with the first end (21) of the shock absorber (2),
wherein each of the two lower fork tubes (8) is a hollow tube with an opening (81) facing upward; the two lower fork tubes (8) extend downward from two ends of the fork brace (7) correspondingly and distal ends of the two lower fork tubes (8) are connected with two ends of an axle (51) of a front wheel (5) correspondingly; the two inner tubes (62) are inserted into the two lower fork tubes (8) through the openings (81) correspondingly and movably mounted in the two lower fork tubes (8).

3. The single shock suspension fork for bicycles as claimed in claim 1, wherein the shock absorber (2) is a hydraulic damper or an air damper.

4. The single shock suspension fork for bicycles as claimed in claim 2, wherein the shock absorber (2) is a hydraulic damper or an air damper.

5. The single shock suspension fork for bicycles as claimed in claim 1, wherein the shock absorber (2) is a spring assembly.

6. The single shock suspension fork for bicycles as claimed in claim 2, wherein the shock absorber (2) is a spring assembly.

7. The single shock suspension fork for bicycles as claimed in claim 1, wherein the shock absorber (2) includes a hydraulic rod and a spring fit around the hydraulic rod.

8. The single shock suspension fork for bicycles as claimed in claim 2, wherein the shock absorber (2) includes a hydraulic rod and a spring fit around the hydraulic rod.
